# EUROPÄISCHE PATENTSCHRIFT

(11) **EP 2 473 831 B1**
(45) Veröffentlichungstag und Bekanntmachung des Hinweises auf die Patenterteilung: **31.01.2018**
(21) Anmeldenummer: 10755095.6
(22) Anmeldetag: 26.08.2010
(51) Int. Cl.: G01M 3/36, G01M 3/38

(54) **VERFAHREN SOWIE PRÜFVORRICHTUNG ZUR BERÜHRUNGSLOSEN DICHTIGKEITSPRÜFUNG VON PACKMITTELN**
METHOD AND TESTING DEVICE FOR THE NON-CONTACT LEAK TESTING OF PACKAGING MEANS
PROCÉDÉ AINSI QUE DISPOSITIF DE CONTRÔLE PERMETTANT DE CONTRÔLER SANS CONTACT L'ÉTANCHÉITÉ DE MATÉRIAUX D'EMBALLAGE

(30) Priorität: 03.09.2009 DE 102009039875
(43) Veröffentlichungstag der Anmeldung: 11.07.2012
(73) Patentinhaber: KHS GmbH, 44143 Dortmund (DE)
(72) Erfinder: HERRMANN, Jürgen, 57520 Rosenheim (DE); SCHORN, Wolfgang, 59506 Hönningen (DE)
(86) Internationale Anmeldenummer: PCT/EP2010/005231
(87) Internationale Veröffentlichungsnummer: WO 2011/026585

(56) Entgegenhaltungen:
- DE-A1- 19 531 754
- DE-A1- 19 959 198
- US-B1- 6 427 524

## Beschreibung

Die Erfindung bezieht sich auf ein Verfahren zur berührungslosen Dichtigkeitsprüfung von Packmitteln gemäß Oberbegriff Patentanspruch 1 sowie auf eine Vorrichtung zur berührungslosen Dichtigkeitsprüfung von Packmitteln gemäß Oberbegriff Patentanspruch 12.

Packmittel im Sinne der Erfindung sind insbesondere solche, die bzw. deren Wandung durch äußere Krafteinwirkung verformbar sind, wie z.B. dünnwandige Weichverpackungen, aus Zuschnitten aus Flachmaterial hergestellte Verpackungen, Tuben, Beutel, Behälter oder Flaschen, auch solche aus Kunststoff, insbesondere aus PET, PEN oder PE usw.

Beispielsweise in der Getränkeindustrie ist es bekannt, Behälter, wie zum Beispiel Kunststoffflaschen, insbesondere gefüllte und verschlossene Kunststoffflaschen auf ihre Dichtheit zu kontrollieren, und undichte Behälter auszusortieren. Dies aus dem Grunde, da aus undichten Kunststoffflaschen beispielsweise Kohlensäure entweichen kann. Ein Entweichen von Kohlensäure kann dazu führen, dass beispielsweise ein Getränk schal wird. Denkbar ist aber auch, dass Fremdstoffe in den Behälter, bzw. in die Kunststoffflasche eindringen können, so dass das Füllgut sogar verderben kann. Möglich ist, dass zum Beispiel ein Verschluss der Kunststoffflasche diese nicht korrekt abdichtet, oder dass kleinste Haarrisse oder andere Beschädigungen bzw. Schwächungen In der Behälterwand vorhanden sind, welche durch Inspektionsvorrichtungen nicht erkannt wurden.

Die US 4 955 226 befasst sich mit Verfahren und Vorrichtungen zur Dichtigkeitsprüfung von Packmitteln in Form von versiegelten Kunststoffbeutel, die auf einer von einem Packmitteltransporteur gebildeten Transportstrecke getaktet an einer Prüfposition vorbei bewegt werden. An der Prüfposition wird der jeweilige Beutel mit einem rahmenartigen Niederhalter fixiert und zugleich mit der Kraft eines Stempels beaufschlagt. Die hierbei auftretende Verformung des jeweiligen Kunststoffbeutels wird mit Hilfe eines mechanischen, diesen Beutel ebenfalls berührenden Sensors gemessen.

Die US 4 955 266 befasst sich mit der Dichtigkeitsprüfung von Packmitteln. Dazu sieht diese Schrift vor, dass das schlaffe Packmittel mit derart einem Stempel beaufschlagt wird, dass das Packmittel insgesamt verformt wird. Weiterhin schlägt die Schrift vor, dass die Verformung des Packmittels in einem Bereich des Packmittels mit einem Messfühler über einen Zeitraum beobachtet wird, wobei anhand der Messwerte des Messfühlers auf eine Undichtigkeit des Packmittels geschlossen wird. Nachtellig an dieser Vorgehensweise ist die Berührung des Packmittels mit dem Stempel und auch dem Messfühler wodurch es zu Beschädigungen des Packmittels kommen kann.

Ebenfalls bekannt wurde eine Vorrichtung nach der DE 1 953 174. Diese Schrift befasst sich mit der Überprüfung, ob dünnwandige, aus Aluminium bestehende Behälter unter Druck stehen oder nicht. Dazu sieht diese Schrift mehr im Detail vor, dass ein Behälter mit einem Druckimpuls eines gerichteten Fluidstromes beaufschlagt wird, wobei auf der Oberfläche des zu überprüfenden Behälters eine Verformung erzeugt wird. Der Auswertung der Ergebnisse liegt die Erkenntnis zu Grunde, dass bei einem Behälter, der nicht unter Druck steht, eine größere Verformung erzeugt wird, als bei einem verschlossenen Behälter. Nachteilig an dem vorgestellten Verfahren ist, dass es nicht dazu geeignet ist, Behälter, die aus einem flexiblen Material bestehen auf Dichtigkeit zu überprüfen.

Die DE 10 2006 054 290 A1 befasst sich mit einer Dichtigkeitsprüfung von Kunststoffflaschen. Zur Dichtigkeitsprüfung wird der Behälter mechanisch von einem Paar Kompressionselementen zusammengedrückt. Nachteilig bei dem in der DE 10 2006 054 290 A1 offenbarten Vorgehen, ist der Umstand, dass eine solche Dichtigkeitsprüfung nicht in einen kontinuierlichen Prozessablauf eingebunden werden kann, da die betreffende Kunststoffflasche zu jeder Dichtigkeitsprüfung aus dem Flaschenfluss herausgenommen werden muss, oder der Flaschenfluss gar unterbrochen werden muss.

Die DE 39 36 163 A1 dagegen schlägt eine berührungslose Dichtigkeitsprüfung hermetisch abgeschlossener Behälter vor. Die hermetisch abgeschlossenen Behälter werden in eine Prüfkammer überführt, und dort einem Prüfdruck unterworfen. Dabei soll das Problem gelöst werden, eine Vielzahl von Behältern unterschiedlichster Konfiguration mit unterschiedlichen Inhalten bei hohen Prüfgeschwindigkeiten zu kontrollieren. Allerdings wird auch hierzu der Behalterfluse beeinträchtigt oder gar unterbrochen.

Die DE 42 14 958 A1 befasst sich mit einer kontinuierlich arbeitenden Inspektionsmaschine für z.B. Kunststoffflaschen, welche die Kunststoffflasche einer Dichtigkeitsprüfung unterzieht. Allerdings sind die Kunststoffflaschen weder gefüllt noch verschlossen. Vielmehr wird Sterilluft in die Kunststoffflasche eingeleitet. Der mit Sterilluft gefüllte innenraum wird dann unter Druck gesetzt. Ein Druckabfall zeigt eine defekte Kunststoffflasche an.

In der DE 41 36 472 A1 wird vorgeschlagen, gefüllte und verschlossene Flaschen kontinuierlich durch ein Flussigkeitsbad zu transportieren. In dem Wasserbad wird die in der Flasche befindliche Flüssigkeit in Schwingungen versetzt, so dass insbesondere Kohlensäure ausperit. Ist der Verschluss der Flasche nicht dicht, soll dies zu einem Austreten einer gewissen Getränkemenge führen, wodurch sich der Füllstand der Flasche verringert. Mit einer anschließenden Füllstandskontrolle soll dies detektiert werden, so dass die betreffende Flasche aussortiert werden könne.

US 6427 524 B1 offenbart ein Verfahren zur Dichtigkeitsprüfung von halbsteifen Behältern aus Kunststoff, die sich entlang eines Hochgeschwindigkeits-Produktionsbands bewegen, wobei jeder Behälter eine Kompressionspassage durchläuft, in welcher der Behälter einer Kompressionskraft ausgesetzt wird. Während dieser Krafteinwirkung wird der Innendruck des Behälters mittels zwei an zwei verschiedenen Stellen entlang der Kompressionspassage angeordneten Kontaktsensoren gemessen.

Die DE 195 31 754 A1 befasst sich mit einer Druckkontrolle sich bewegender Behälter. Gegen den Behälter wir ein Fluid, z.B. Luft gerichtet, so dass eine Verformung des Behälters bewirkt wird. Übersteigt die Verformung einen bestimmten Schwellenwert, wird angezeigt, dass der Behälter nicht unter Druck steht, also nicht richtig abgedichtet ist. Dieses System eignet sich besonders für dünnwandige Aluminiumdosen. Um sicherzustellen, dass der Behälter bei der Druckbeaufschlagung mit dem Fluid nicht verschoben wird, wird direkt gegenüber zum ersten Fluidstrahl ein zweiter Fluidstrahl erzeugt. Dadurch entstehen aber auch Verformungen aufgrund des zweiten Fluidstrahls. Um festzustellen, ob der Behälter bzw. die dünnwandige Aluminiumdose hinreichend dicht ist, wird eine komplizierte Messstruktur installiert, welche beide Verformungen zueinander in Beziehung setzt, um so auf einen hinreichend dichten oder unbrauchbaren Behälter schließen zu können. Beispielsweise müssen Sensoren installiert werden, um die Verformungen aufnehmen zu können.

Aufgabe der Erfindung ist es, ein Verfahren aufzuzeigen, bei dem unter Vermeidung der Nachteile des Standes der Technik eine berührungslose Dichtigkeitsprüfung von mit einem Füllgut gefüllten und verschlossenen Packmitteln möglich ist, und zwar unabhängig oder zumindest weitestgehend unabhängig davon, ob das jeweilige gefüllte und verschlossene Packmittel einen Innendruck aufweist oder aber drucklos ist. Zur Lösung dieser Aufgabe ist ein Verfahren entsprechend dem Patentanspruch 1 ausgebildet. Eine Vorrichtung zur berührungslosen Dichtigkeitsprüfung ist Gegenstand des Patentanspruchs 10.

Bei der Erfindung erfolgt die berührungslose Dichtigkeitsprüfung von Packmitteln grundsätzlich so, dass das jeweilige Packmittel zumindest während des wenigstens einen Prüf- oder Messschrittes der Dichtigkeitsprüfung einen Innendruck aufweist, der wenigstens gleich, bevorzugt aber größer ist als der Umgebungsdruck, dass das Packmittel an wenigstens einem Bereich, beispielsweise an einem Wandbereich oder an einem Packmittelverschluss mit wenigstens einem Druckmediumimpuls beaufschlagt und dann die dabei auftretende Verformung des Packmittels mit wenigstens einer opto-elektrischen Sensoreinheit erfasst und in einer Auswerte- und/oder Steuereinheit die der Verformung durch den wenigstens einen Druckmediumimpuls entsprechenden Daten ausgewertet werden.

Vorteilhaft kann das jeweilige Erfassungssystem bzw. dessen opto-elektrische Sensoreinhelt das Vorhandensein einer durch den Druckmediumimpuls bewirkten Einbuchtung in dem betreffenden. Packmittelwandbereich detektieren, wobei die Auswerte- und/oder Steuereinheit eine tatsächliche Form der Einbuchtung, d.h. u.a. deren Tiefe und/oder deren Durchmesser bestimmt.

Die Verarbeitung der von der opto-elektrischen Sensoreinheit gelieferten Daten kann in unterschiedlichster Weise erfolgen, beispielsweise in einer Methode, die als "Absolutmessung" bezeichnet werden kann und bei der in der Auswerte- und/oder Steuereinheit ein Referenzbild oder Referenzdaten des betreffenden Packmitteltyps (z.B. Material, Art, Größe, Füllmenge) und/oder des darin eingefüllten Füllgutes und daraus resultierend eine noch zulässige Form der Einbuchtung abgelegt sind. In der Auswerte- und/oder Steuereinheit werden die Referenzdaten mit der Form der tatsächlichen Einbuchtung oder Verformung verglichen. Dies kann natürlich auch in einem mit der Auswerte- und/oder Steuereinheit oder nur mit einer Steuereinheit verbundenen Rechner durchgeführt werden. Übersteigt die detektierte, tatsächliche Form der Einbuchtung einen vorgegebenen Wert, generiert die Auswerte- und/oder Steuereinheit ein Signal zum Aussortieren der betreffenden Packmittel.

Bei dem erfindungsgemäßen Verfahren erfolgt die berührungslose Dichtigkeitsprüfung dadurch, dass In wenigstens zwei zeitlich aufeinander folgenden Prüf- oder Messschritten die durch den jeweiligen Druckmittelimpuls verursachten Verformungen mit der opto-elektrischen Sensoreinheit erfasst werden. Die entsprechenden Messdaten oder Ergebnisse der beiden Prüf- oder Messschritte werden dann ausgewertet und/oder miteinander verglichen. Bei nicht tolerierbaren Abweichungen wird auf ein undichtes Packmittels geschlossen. Dieses Verfahren, welches auch als Vergleichsmessung bezeichnet werden kann, hat u.a. den grundsätzlichen Vorteil, dass das Messergebnis eventuell verfälschende Einflussfaktoren, wie z.B. unterschiedlicher Vorspann- oder Innendruck der Packmittel, Abweichungen im Füllgrad, räumliche Anordnung der in den Packmitteln befindlichen Produkte, Temperatur usw. automatisch kompensiert werden, da diese Eintlussgrößen bei beiden Messungen unverändert sind und somit nicht als das Mess- oder Prüfergebnis beeinflussende Störgrößen in Erscheinung treten.

Zweckmäßiger Weise weist die Düse des Druckmediumsystems einen Abstand von weniger als 15 mm vorzugsweise einen Abstand von 5 bis 6 mm zum betreffenden Packmittelwandbereich auf. Dies ist vorteilhaft, da der erzeugte Druckmediumstrahl so nur eine relativ kurze Wegstrecke überwinden muss, was sich vorteilhaft auf seine punktförmige Ausrichtung und auf geringe oder gar auf keine Druckenergieverluste auswirkt.

in bevorzugter Ausgestaltung weist die Düse eine Düsenöffnung mit einem bevorzugten Öffnungsbetrag von weniger als 5 mm vorzugsweise von 2 mm (lichter Durchmesser) auf, so dass sich dies ebenfalls auf eine besonders punktförmige Konzentration des Druckmediumstrahls auswirkt. Natürlich soll der Öffnungsbetrag nur beispielhaft genannt sein. Denkbar ist zum Beispiel eine Düse mit verstellbarer Düsenöffnung. Das verwendete Druckmedium ist bevorzugt ein gas- und oder dampfförmiges Druckmedium, zum Beispiel Druckluft oder ein unter Druck stehendes Inertgas.

Insbesondere dann, wenn als opto-elektrische Sensoreinheit eine Kamera verwendet ist, ist die Kamera zweckmäßiger Weise bezogen auf die Düse oberhalb dieser angeordnet und in einem schrägen Winkel von oben auf den betreffenden Packmittelwandberelch ausgerichtet, um eine möglichst unbeelnträchtigte Betrachtungsposition der Kamera zu erreichen, Selbstverständlich kann die Kamera auch in einem schrägen Winkel von unten auf den betreffenden Packmittelwandbereich ausgerichtet sein. Um eine möglichst senkrechte Einwirkung des Druckmediums sowie eine senkrecht ausgerichtetes Erfassungssystem zu erreichen, können das Erfassungssystem und die Düse bei der Messung nahezu parallel zum Packmittel ausgerichtet sein. Natürlich kann der genaue Winkel abhängig von den optimalen Materialeigenschaften der Packmittelwand varijeren.

In zweckmäßiger Ausgestaltung weist das Erfassungssystem bei Verwendung einer Kamera als opto-elektrische Sensoreinheit zwei Lichtquellen auf, von denen eine bezogen auf die Kamera oberhalb und die andere Lichtquelle unterhalb der Kamera aber oberhalb der Düse angeordnet ist. Mit dieser vorteilhaften Ausführung ergibt sich eine besonders gute Ausleuchtung des betreffenden Packmittelwandbereiches. Natürlich sind beide Lichtquellen mit der Auswerte- und/oder Steuereinheit verbunden, so dass beide Lichtquellen gleichzeitig zur Erzeugung des Druckmediumstrahls angesteuert werden können. Selbstverständlich liegt es im Sinn der Erfindung beide Lichtquellen auch zeitlich versetzt anzusteuern um so eine entsprechenden Schattenbildung der Einbuchtung mittels der Kamera aufzunehmen, was sich vorteilhaft auf eine noch sichere Auswertung der aufgenommenen Daten der Einbuchtung auswirkt.

In einer bevorzugten Ausgestaltung der Erfindung Ist die Prüfeinrichtung einer Etikettiermaschine zugeordnet und dabei z.B. so angeordnet ist, dass die noch nicht etikettierte, aber gefüllte und verschlossene Packmittel berührungslos auf ihre Dichtigkeit hin überprüft werden.

Selbstverständlich können mit der Erfindung auch bereits etikettierte Packmittel berührungslos auf ihre Dichtigkeit überprüft werden, was besonders dann sinnvoll ist, wenn nicht etikettierte Packmitteln nicht überprüft werden können. Alternativ kann die Prüfeinrichtung freistehend an einem Transporteur, z.B. an einem Transportband angeordnet sein, wobei die Auswertung analog verläuft.

Da die zu überprüfenden Packmittel mitunter eine hohe Eigengeschwindigkeit besitzen, und um einen Packmittelfluss in einer Anlage nicht zu beeinträchtigen, ist es im Sinne der Erfindung zweckmäßig, wenn das Ventil der Prüfeinheit als Hochleistungsschnellschlussventil ausgeführt Ist. Dieses kann in besonders geeigneter Weise auf die an der Prüfeinrichtung bzw. der Düse relativ schnell vorbeilaufenden Packmittel geöffnet und geschlossen werden, so dass jedes Packmittel berührungslos auf hinreichende Dichtigkeit überprüft werden kann. Eine tatsächliche Überprüfung jedes Packmittels ist insbesondere im Lebensmittelbereich erforderlich, da stichprobenartige Untersuchungen nicht ausreichend sind.

Der Druckmediumstrahl kann auf einen später zu etikettierenden Bereich der Packmittel gerichtet sein. Denkbar ist aber auch, dass der mit dem Druckmediumstrahl kurzzeitig zu beaufschlagende Packmittelwandbereich eine Schulter einer Flasche oder flaschenartigen Packmittels und/oder ein zylindrischer Bereich oder Mentelbereich des Packmittels ist.

Der Druckmediumimpuls wird nur dann erzeugt, wenn sich auch ein Packmittel vor der Düse befindet. Wegen der zeitlich sehr kurzen Erzeugung und Aufrechterhaltung eines oder mehrerer Druckmediumimpulsstrahlen pro Packmittel ergibt sich eine geräuschreduzierte berührungslose Arbeitsweise der jeweiligen Prüfeinrichtung. Messungen haben ergeben, dass eine Lautstärke von weniger als 80 db bzw. genau 74 db eingehalten werden kann, wenn der zeitlich sehr kurze Druckmediumimpulsstrahl erzeugt wird. Der zeitlich sehr kurze Druckmediumimpulsstrahl wirkt sich natürlich auch auf einen geringen Druckmediumverbrauch aus.

Die Auswerteeinheit generiert beispielsweise auch ein Signal zum Aussortieren der betreffenden Packmittel. Das betreffende Packmittel kann dann vor oder nach einer weiteren Behandlung, beispielsweise vor oder nach dem Etikettieren aussortiert werden und/oder bei Verwendung der Prüfvorrichtung an einer Etikettiermaschine werden durch die Auswerteeinheit oder durch das von dieser generierte Signal die Etikettieraggregate so angesteuert, dass das betreffende Packmittel nicht etikettiert wird.

Überraschender Weise wurde gefunden, dass mittels des zeitlich sehr kurzen Druckmediumimpulses und der genauen, punktförmigen Belassung des definierten Packmittelwandbereiches störende Schwingungen in dem betreffenden Packmittelwandbereich bzw. in der restlichen Packmittelwand und eine störende Entgasung, welche einer Bildung einer Einbuchtung entgegenwirkt und einer Detektion derselben entgegensteht, umgangen werden können.

Als opto-elektrische Sensoreinheit eignet sich auch ein Laserwegmesssensor, der das Vorhandensein einer durch den Druckmediurnimpuls bewirkten Einbuchtung in dem betreffenden Packmittelwandbereich detektiert Um eine möglichst unbeeinträchtigte Betrachtungsposition des Laserwegmesssensors zu erreichen, ist die Düse bezogen auf den Sensor zweckmäßiger Weise oberhalb dieser oder unterhalb dieser angeordnet, und bevorzugt in einem schrägen Winkel von oben oder unten auf den betreffenden Packmittelwandbereich ausgerichtet, wobei diese bevorzugte Anordnung gewählt werden sollte, wenn dadurch Vorteile bezogen auf eine exakt senkrechte Ausrichtung erreicht werden können. Selbstverständlich kann die Düse (die Düsen) auch in einem schrägen Winkel von rechts und/oder links auf den betreffenden Packmittelwandbereich ausgerichtet sein. Natürlich ist es denkbar die Düse auch neben dem Laserwegmesssensor anzuordnen.

In bevorzugter Ausgestaltung ist der Laserwegmesssensor so angeordnet, dass dieser mit einer senkrechten Achse parallel zur Mittelachse der Packmittel steht. Die Packmittel werden dabei am Laserwegmesssensor vorbeigeführt, wobei die von der Druckluft erzeugte Eindellung oder Verformung als Distanz aufgezeichnet wird. Günstiger Weise kann ein Sensormesskopf vertikal in verschiedenen Winkeln angeordnet sein. In bevorzugter Ausgestaltung kann ein Winkel von 8,5° vorgesehen sein, ohne den Winkelbetrag auf den beispielhaft genannten Wert zu beschränken. Mit der beispielhaften Winkellage von 8,5° ist der von dem Laserwegmesssensor ausgestrahlte Laserstrahl in der Senkrechten um plus oder minus 8,5° geneigt, wobei der Neigungswinkel nicht fest vorgegeben Ist, und abhängig vom Sensorkopftyp sein kann.

Zur Messwertaufbereitung kann vorgesehen sein, eine gemessene Kurve um Messfehler des Laserwegmesssensors zu bereinigen. Es kann auch vorgesehen sein, die Messkurve zu glätten, oder eine Tiefpassfilterung der Kurve durchzuführen. Selbstverständlich können vorgenannte Maßnahmen einzeln oder sequentiell gemeinsam (auch mehrfach) genutzt werden, um die Messwertaufbereitung durchzuführen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der inhalt der Ansprüche zu einem Bestandteil der Beschreibung gemacht.

Die Erfindung wird im Folgenden im Zusammenhang mit den Figuren an Ausführungsbeispielen näher erläutert. Es zeigen:
- Fig. 1: in vereinfachter Darstellung eine Draufsicht auf eine Vorrichtung gemäß der Erfindung zur Dichtigkeitsprüfung von Packmitteln in Form von an ihrem Flaschenmantel verformbaren Flaschen, beispielsweise in Form von Kunststoffflaschen:
- Fig. 2: einen Längsschnitt durch die Vorrichtung der Figur 1;
- Fig. 3: in schematischer Funktionsdarstellung eine Prüfeinrichtung zur Verwendung bei der Vorrichtung der Figuren 1 und 2;
- Fig. 4: die opto-elektrische Sensoreinheit bei einer weiteren Ausführungsform der Erfindung;

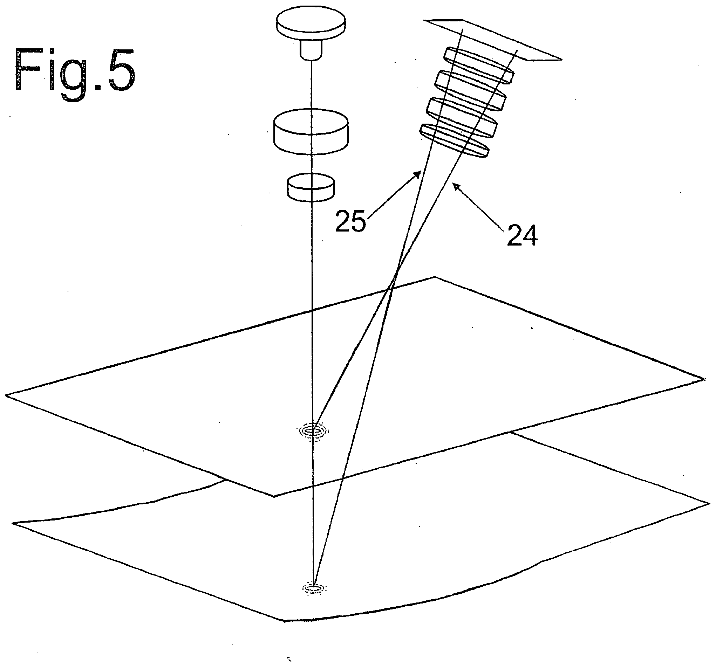

- Fig. 5: Details der opto-elektrischen Sensoreinheit der Figur 4;
- Fig. 6: in einer Darstellung ähnlich Figur 2 eine weitere Ausführungsform der erfindungsgemäßen Vorrichtung;
- Fig. 7: in einer Darstellung ähnlich Figur 1 eine bevorzugte Ausführungsform der erfindungsgemäßen Vorrichtung.

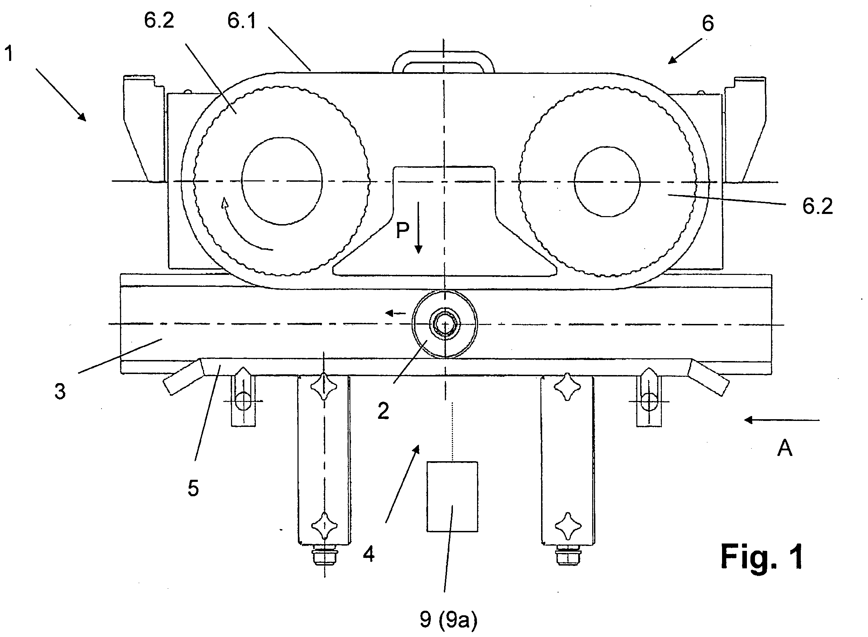

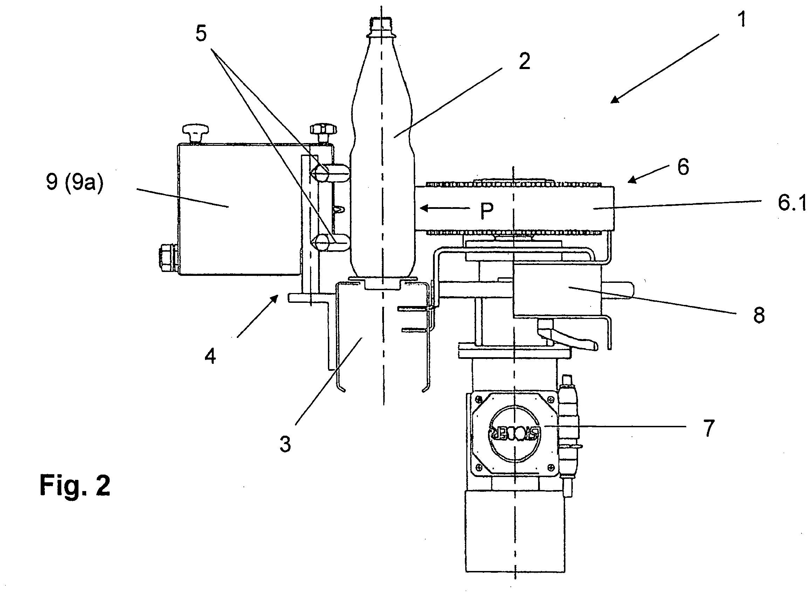

die in den Figuren 1 und 2 allgemein mit 1 bezeichnete Vorrichtung dient zur berührungslosen Dichtigkeitsprüfung von Packmitteln, und zwar bei der dargestellten Ausführungsform zur berührungslosen Dichtigkeitsprüfung von Flaschen, die zumindest in einem Teilbereich, beispielsweise im Rumpfbereich verformbar und beispielsweise als Kunststoffflaschen aus PET ausgebildet sind. Die Vorrichtung 1 umfasst u.a. einen Transporteur 3, der bei der dargestellten Ausführungsform als endlos umlaufend antreibbare Scharnierbandkette ausgebildet ist und mit dem die Flaschen 2 aufrechtstehen, d.h. mit ihrer Flaschenachse in vertikaler Richtung orientiert in einer horizontalen oder im Wesentlichen horizontalen Transportrichtung A jeweils nach einander u.a. an einer Prüfposition 4 vorbei bewegt werden, an der in der nachstehend noch näher beschriebenen Weise die berührungslose Dichtigkeiteprüfung der mit einem Füllgut gefüllten und dicht verschlossenen Flasche 2 erfolgt.

Der Transporteur 3 weist zumindest im Bereich der Prüfposition 4 ein ortsfestes, d.h. mit dem Transportelement (Scharnierbandkette) des Transporteurs nicht mitbewegtes Führungsgeländer 5 an der einen Seite der von dem Transporteur 3 gebildeten Transportstrecke und einen Riemenförderer 6 an der anderen Seite dieser Transportstrecke auf. Das Führungsgeländer 5 umfasst bei der dargestellten Ausführungsform zwei leistenartige Führungselemente, die die In horizontaler Richtung von einander beabstandet sind und sich jeweils in Transportrichtung A erstrecken. Der Riemenförderer 6 besteht im Wesentlichen aus einem Riemen 6.1, der über zwei Riemenräder 6.2 geführt ist, und zwar derart, dass er eine horizontale Schlaufe mit einer sich an einer Seite des Transporteurs 3 erstreckenden Schlaufenlänge bildet, die bei der Dichtigkeitsprüfung mit einer Anpresskraft P gegen den dem Führungsgeländer 5 gegenüber liegenden Umfangsbereich der jeweiligen Flasche 2 anliegt. Eines der Riemenräder 6.2 ist durch einen Antrieb 7 gesteuert angetrieben. Weiterhin sind Stellmittel 8 zum Einstellen der Anpresskraft P vorgesehen. Mit dem Transporteur werden die Flaschen 2 in Transportrichtung A in den Bereich zwischen dem Riemenförderer 6 und dem Führungsgeländer bewegt, dabei zunehmend zwischen dem Riemenförderer 6 und dem Führungsgeländer eingespannt und durch mechanisches Quetschen am Flaschenrumpf mit einem z.B. zusätzlichen Innendruck beaufschlagt.

Für die berührungslose Dichtigkeitsprüfung ist an der Prüfposition 4 eine Prüfeinheit 9 vorgesehen, die generell so ausgeführt ist, dass die an der Prüfposition 4 befindliche Flasche 2 an ihrem Flaschenrumpf zwischen den beiden Führungselementen des Führungsgeländers 5 mit einem kurzfristigen Strahl eines Druckmediums (Druckmediumstrahl), beispielsweise eines gas- und/oder dampfförmigen Druckmediums beaufschlagt wird und dann mit Hilfe einer opto-elektrischen Sensoreinheit die durch den auf die Flasche auftreffenden Druckmedlumstrahl erzeugte Verformung der Flaschenwand erfasst und aufgrund der Form und/oder Größe dieser Verformung in der nachstehend noch näher beschriebenen Weise eine eventuelle mangelnde Dichtigkeit der jeweillgen Flasche 2 ermittelt wird.

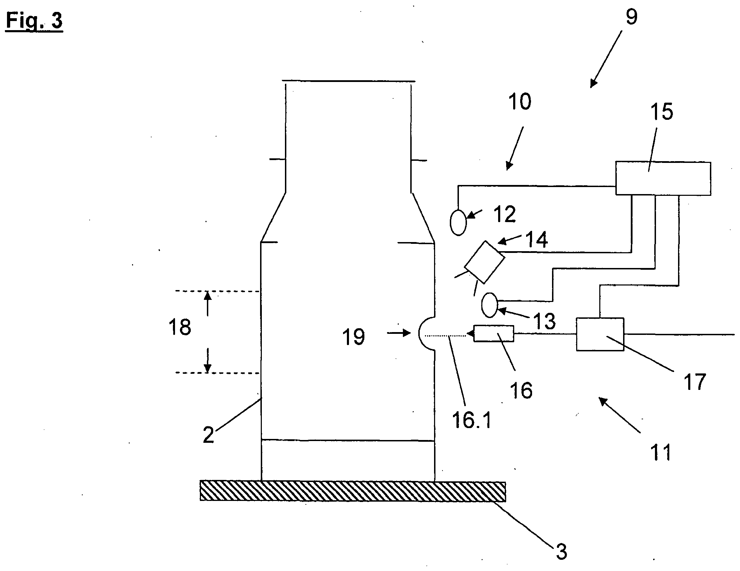

In der Figur 3 ist die Prüfeinrichtung 9 schematisch dargestellt, und zwar zusammen mit einer zu überprüfenden Flasche 2. Die Prüfeinrichtung 9 weist eine opto-elektrische Sensoreinheit 10 und ein Druckmediumsystem 11 auf. Die opto-elektrische Sensoreinheit 10 besteht bei der dargestellten Ausführungsform u.a. aus zwei Lichtquellen 11 und 13 und einer Kamera 14. Die Komponenten der opto-elektrischen Sensoreinheit 10 sind mit einer Auswerte- und/oder Steuereinheit 15 verbunden. Das Druckmediumsystem 11 umfasst u.a. eine Düse 16 ein steuerbares Ventil 17, welches bevorzugt als Hochleistungsschnellschlussventil ausgeführt ist, sowie eine nicht dargestellte Druakmediumquelle, Das Ventil 17 steht mit der Auswerte- und/oder Steuereinheit 15 in Verbindung.

Befindet sich eine Flasche 2 an der Prüfposition 4 und damit an der Position der Düse 17, wird durch Ansteuern bzw. durch kurzzeitiges Öffnen des Ventils 17 ein kurzzeitiger bzw. impulsförmiger Druckmediumstrahl bzw. ein Druckmediumimpuls16.1 erzeugt, der auf einen Bereich 18 des Rumpfes der Flasche 2 gerichtet ist. Der Druckmedienimpuls 16.1 hat beispielsweise eine Impulsdauer von weniger als 10 ms, bevorzugt eine Impulsdauer im Bereich zwischen 5 bis 6 ms. Der Druck des an der Düse 16 als Strahl ausgebrachten Druckmediums ist bevorzugt größer als 0,5 bar.

Der Druckmediumimpuls 16.1 belastet den Bereich 18 der Flasche 2 punktförmig und erzeugt dabei keine Verformung oder Einbuchtung 19 oder nur eine Verformung oder Einbuchtung 19 mit geringer Tiefe, wenn die Flasche 2 dicht verschlossen ist, oder aber eine Verformung oder Einbuchtung 19 größerer Tiefe, wenn die Flasche 2 nicht dicht verschlossen ist. Während dieser berührungslosen Dichtigkeitsprüfung ist die Flasche 2, wie oben ausgeführt, mit ihrem Rumpfbereich zwischen dem Führungsgeländer und dem Riemen 6.1 des Riemenförderers eingespannt, sodass durch diese Einspannung und durch das hierdurch erzeugte Quetschen des Flaschenrumpfes in der Flasche 2 ein zusätzlicher Innendruck aufgebaut wird.

Gleichzeitig mit der Ansteuerung des Ventils 17, also mit der Erzeugung des kurzzeitigen Druckmediumimpulses 16.1 werden die beiden Lichtquellen 12 und 13 und die Kamera 14 angesteuert. Die Lichtquellen 12 und 13 leuchten den Wandbereich 18 der betreffenden Flasche blitzartig aus, sodass die Kamera 14 entsprechende Bilddaten vom Bereich 18 und einer dortigen Verformung 19 aufnehmen kann. Diese Daten, die der Form und/oder Tiefe und/oder dem Durchmesser der Verformung 19 entsprechen, werden der Auswerte- und/oder Steuereinheit zugeführt, in der diese Daten dann in geeigneter Weise ausgewertet werden.

Die Düse 16 weist beispielsweise eine Düsenöffnung mit einem lichten Durchmesser von bevorzugt 2 mm auf und so angeordnet, dass der Abstand der Düse 16 von dem Bereich 18 der an der Prüfposition befindlichen Flasche 2 kleiner als 15 mm, bevorzugt 5 bis 6 mm beträgt.

Die Kamera 14 ist beispielsweise oberhalb der Düse 16 angeordnet. Die beiden Lichtquellen 12 und 13 sind beidseltig von der Kamera 14 angeordnet, und zwar die Lichtquelle 12 oberhalb und die Lichtquelle 13 unterhalb der Kamera, wobei die optische Achse der Kamera 14 schräg auf die Umfangsfläche bzw. den Bereich 18 der Flasche 2 gerichtet ist, d.h. mit der vertikalen Flaschenachse einen Winkel kleiner als 90° einschließt, der sich nach oben hin öffnet. Durch diese Anordnung der Kamera 14 ist eine optimale Erfassung der jeweiligen Verformung bzw. Einbuchtung 19 sicher gestellt.

Die Auswertung kann auf verschiedene Weise erfolgen, beispielsweise dadurch, dass die von der Kamera 14 gelieferten Bilddaten in einem absoluten Prüf- und Meßverfahren in der Auswerte- und/oder Steuereinheit 15 mit dortigen Referenzbildern oder Referenzdaten des jeweiligen Packmitte- oder Flaschentyps auch unter Berücksichtigung der von dem Riemenförderer erzeugten Anpresskraft P bzw. des hieraus resultierenden zusätzlichen Innendrucks der jeweillgen Flasche 2 ausgewertet werden. Wird hierbei eine nicht zu tolerierende Abweichung festgestellt, d.h. ist die Verformung oder Einbuchtung 19 derart, dass der Innendruck der Flasche 2 der durch den Druckmediumimpuls 16.1 erzeugten Druckkraft nicht genügend entgegenwirkt, was auf eine nicht dicht verschlossene Flasche schließen lässt, so erzeugt die Auswerte- und/oder Steuereinheit 15 ein Signal zum Aussortieren oder Ausschleusen der betreffenden Flasche 2, da diese offensichtlich nicht ausreichend dicht verschlossen ist.

Bevorzugt erfolgt die Dichtigkeitsprüfung jeder Flasche aber in ein einem Vergleichsverfahren in wenigstens zwei Prüf- oder Messschritten. Hierfür sind der Transporteur 3 aber insbesondere auch der Riemenförderer 6 getaktet so angetrieben, dass Jede Flasche 2, die die Prüfposition 4 erreicht hat, dort für eine vorgegebene Zeit verweilt, beispielsweise für eine Zeltdauer kleiner als 5 Sekunden, vorzugsweise kleiner als 2 Sekunden. Während dieser Verweildauer erfolgt in zeitlichem Abstand, beispielsweise in einem Zeitintervall von kleiner als 5 Sekunden, vorzugsweise kleiner als 2 Sekunden eine zweifache berührungslose Dichtigkeitsprüfung jeweils durch Ausbringen eines kurzzeitigen Druckmediumimpulses 16.1 auf ein und demselben Flaschenbereich 18 mit Hilfe der Düse 16 und des diese Düse ansteuernden Ventiles 17. In beiden Fällen wird jeweils die Einbuchtung bzw. Verformung 19 an der Flasche 2 mit der opto-elektrischen Sensoreinheit 10, d.h. mit der Kamera 14 erfasst und die entsprechenden Daten der Auswerte- und/oder Steuereinheit 15 zugeleitet. Werden erhebliche, d.h. nicht zu tolerierende Abweichungen zwischen den im ersten Prüf- oder Messschritt und den im zweiten Prüf- oder Messschritt der Dichtigkeitsprüfung ermittelten Daten festgestellt, so erzeugt die Auswerte- und/oder Steuereinheit 15 wiederum das Signal zum Aussortieren bzw. Ausschleusen der betreffenden Flasche 2, da diese dann offensichtlich nicht dicht verschlossen ist. Diese Art der Prüfung hat den Vorteil, dass vorrichtungs- und/oder packmittelbedingte und/oder temperaturbedingte Parameter in das Prüfergebnis nicht eingehen.

Durch das mechanische Einspannen der jeweilige Flasche 2 zwischen dem Führungsgeländer 5 und den Riemenförderer 6 und durch den hierbei erzeugten (zusätzlichen) Innendruck in der Flasche 2 werden bei einer nicht dicht verschlossenen Flasche 2 besonders deutliche Unterschiede in den Daten des ersten und zweiten Prüf- oder Messschrittes erreicht.

Weiterhin wird mit dem mechanischen Einspannen der Packmittel während der Dichtigkeitsprüfung auch erreicht, dass die Dichtigkeitsprüfung unter Verwendung des Druckmittelstrahles und der Erfassung der hierbei erzeugten Verformung auch bei Packmitteln anwendbar ist, die von Hause aus nicht stabil sind und/oder keinen Innendruck aufweisen, beispielsweise bei Beutelverpackungen, die aber durch die mechanische Einspannung in einen für die berührungslose Dichtigkeitsmessung formstabilen Zustand gebracht werden.

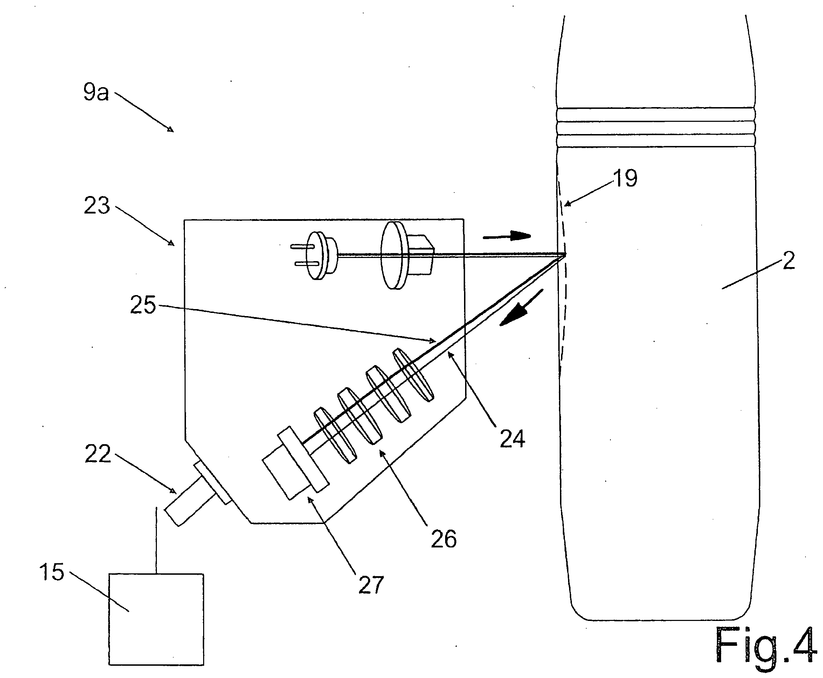

Die Figuren 3 und 4 zeigen eine Prüfeinrichtung 9a, die anstelle der Prüfeinrichtung 9 bei der Vorrichtung 1 zur berührungslosen Dichtigkeitsprüfung verwendet werden kann und die sich von der Prüfeinrichtung 9 im Wesentlichen dadurch unterscheidet, dass anstelle der die Kamera 14 aufweisenden opto-elektrischen Sensoreinheit 10 ein über eine Signal- und Steuerleitung 22 an die Auswerte- und/oder Steuereinheit 15 angeschlossene Laserwegmesssensor 23 verwendet ist. Der Laserwegmesser 23 ist mit seiner Achse in einer Ebene radial oder im Wesentlichen radial zur Achse der an der Messposition 4 befindlichen Flasche 2 angeordnet.

Die Prüfelnrichtung 9a weist ebenso die Auswerte- und/oder Steuereinheit 15, die Düse 16 und das Ventil 17 auf, wobei der Laserwegmesssensor 23 sowie das Ventil 17 wiederum für Steuerungszwecke und zur Übertragung der Daten mit der Steuer- und Auswerteeinheit 15 verbunden sind.

Die berührungslose Dichtigkeitsprüfung der an der Messposition 4 zwischen dem Führungsgeländer 5 und dem Riemenfördererr 6 mit der Kraft P eingespannten Flasche 2 erfolgt wiederum durch Beaufschlagung der Flaschenwandung mit dem Druckmediumstrahl bzw. Druckmittelimpuls 16.1 aus der Düse 16, wodurch die Wandung der Flasche 2 beispielsweise die in der Figur 4 mit unterbrochenen Linien angedeutete Verformung 19 erfährt. Die Form und Größe der Verformung 19 wird dann mit dem Laserwegmesssensor 23 vorzugsweise so erfasst, dass der von dem Laserwegmesssensor 23 ausgesandte und an der noch nicht mit dem Druckmediumimpuls beaufschlagten Flasche 2 reflektierte Laserstrahl 24 mit dem Laserstrahl 25 verglichen wird, der an der mit dem Druckmediumimpuls beaufschlagten Flasche 2 reflektiert wird. Der Laserstrahl 24 fällt beispielsweise nach dem Passieren eines Linsensystems 26 auf einen bestimmten Bereich eines als opto-elektrischer Wandler verwendeten Chips 27. Der Laserstrahl 25 fällt nach dem Passieren des Linsensystems 26 auf einen von dem ersten Bereich beabstandeten Bereich des Chips 27, wobei der Abstand zwischen den beiden Bereichen ein Maß für die Größe der Verformung 19 ist.

Mit der Prüfelnrichtung 9a sind verschiedene Methoden für die Dichtigkeitsprüfung möglich, d.h. z.B. eine Dichtigkeitsprüfung durch Absolutmessung mit nur einem einzigen Prüfschritt, bei der dann bei einer zu großen. d.h. nicht zu tolerierenden Abweichungen der beiden Laserstrahlen 24 und 25 bzw. der Bereiche, auf die diese Laserstrahlen auf den Chip 27 auftreffen, auf eine nicht dicht verschlossene Flasche 2 geschlossen wird und die Auswerte- und/oder Steuereinheit 15 ein Signal zum Aussortieren bzw. Ausschleusen der betreffenden Flasche 2 erzeugt.

Mit der Prüfeinrichtung 9a ist weiterhin auch eine Dichtigkeitsprüfung durch Vergleichsmessung möglich, und zwar dadurch, dass in zwei zeitlich aufeinander folgenden Prüf- oder Messschritten die Abweichung der Laserstrahlen 24 und 25 bzw. deren Abbildungen auf den Chip 27 jeweils erfasst und diese Abweichungen miteinander verglichen werden. Ergibt sich hierbei eine nicht zu tolerierende Differenz, so bedeutet dies, dass die betreffende Flasche 2 nicht dicht verschlossen ist und ausgeschleust werden muss. Die beiden Einzelmessungen oder Prüf- oder Messschritte erfolgen bevorzugt wiederum in einem Zeitintervall kleiner als 5, vorzugsweise kleiner als 2 Sekunden.

Unabhängig von der jeweiligen Methode zur berührungslosen Dichtigkeitsprüfung besteht die Möglichkeit den Laserwegmesssensor 23 bzw. dessen Messkopf vertikal in unterschiedlichen Winkeln anzuordnen. Beispielsweise kann der Laserwegmesser 23 bzw. dessen Messkopf in einem Winkel von 8,5° angeordnet sein, was bedeutet, dass der vom Messkopf ausgesandte Laserstrahl in der Senkrechten bzw. gegenüber einer Achse radial zur Flaschenachse um +/- 8,5° (je nach Einbaulage) geneigt ist. Dem liegt die Erkenntnis zugrunde, dass die Oberflächen von Flaschen, insbesondere von PET-Flaschen 2 nicht ideal glatt sind, vielmehr weisen diese Oberflächeneinschlüsse und/oder Kratzer auf, die die Reflexionseigenschaften stark und insbesondere auch bel einer Verformung der Flaschenwandung unter der Wirkung des Druckmitteistrahls schlagartig verändern können. Beim Messen sollte daher eine Totalreflexion des Laserstrahls vermieden werden. Gleichzeitig darf aber eine diffuse Reflexion nicht zu schwach ausfallen. Aus diesem Grund ist es zweckmäßig, den Laser im Winkel von 8,5° zur Flasche 2 anzuordnen. Die Düse 16 zu Ausbringen des Druckmediumimpulses ist dabei bevorzugt so ausgerichtet, dass sie auf den Auftreffpunkt des Laserstrahls zielt.

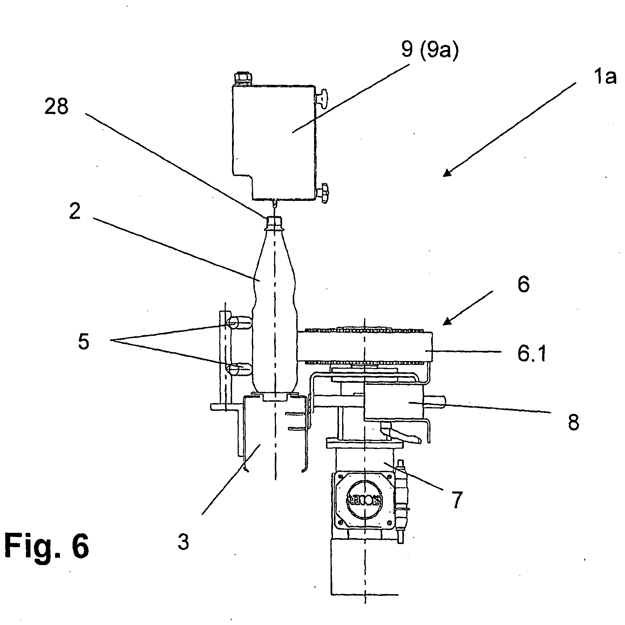

Vorstehend wurde davon ausgegangen, dass für die berührungslose Dichtigkeitsprüfung der verschlossenen Flasche 2 deren Flaschenkörper mit dem Druckmediumstrahl beaufschlagt und die Verformung des Flaschenkörpers erfasst wird. Figur 6 zeigt eine Vorrichtung 1a, bei der die berührungslose Dichtigkeitsprüfung der jeweils verschlossenen und an der Prüfungsposition 4 positionierten Flasche 2 mit einer Prüfeinrichtung 9 bzw. 9a durch Beaufschlagung des aus einem verformbaren Werkstoff, beispielsweise aus Kunststoff bestehenden Behälter- oder Flaschenverschlusses 28 und durch Erfassung der Verformung dieses Verschlusses mittels der opto-elektrischen Sensoreinheit erfolgt. Die Vorrichtung 1a unterscheidet sich hierfür von der Vorrichtung 1 lediglich dadurch, dass die Prüfeinrichtung 9 bzw. 9a oberhalb der jeweiligen, an der Prüfposition 4 positionierten gefüllten und verschlossenen Flasche 2 angeordnet ist und der Druckmediumstrahl auf der Oberseite des Flaschenverschlusses 28, beispielsweise auf die Mitte der Flaschenverschlussoberseite gerichtet ist. Jede Flasche 2 ist bei der berührungslosen Dichtigkeitsprüfung wiederum mit der Kraft P zwischen dem Führungsgeländer 5 und dem Riemenförderer 6 eingespannt. Mit der Vorrichtung 1a ist die berührungslose Dichtigkeitsprüfung mit der Absolutmessung oder bevorzugt mit der Vergleichsmessung in zwei zeitlich aufeinander folgenden Prüf- oder Messschritten möglich.

Wie vorstehend ausgeführt, erfolgt bei der Erfindung die berührungslose Dichtigkeitsmessung bevorzugt durch eine Vergleichsmessung, wofür es bei den Vorrichtungen 1 und 1a allerdings notwendig ist, die Flaschen 2 oder andere Packmittel getaktet an der Prüfposition 4 vorbei zubewegen.

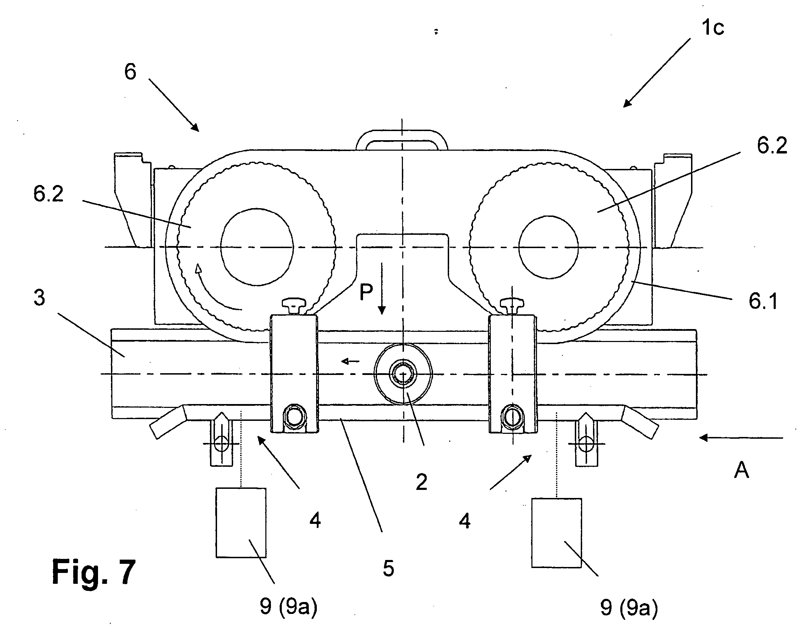

Die Figur 7 zeigt in einer Darstellung ähnlich Figur 1 als weitere Ausführungsform eine Vorrichtung 1b, bei der in Transportrichtung A des Transporteurs 3 aufeinander folgend und voneinander beabstandet zwei Prüfpositionen 4 mit jeweils einer Prüfeinrichtung 9 oder 9a vorgesehen sind, sodass mit der Vorrichtung 1b eine berührungslose Dichtigkeitsprüfung durch Vergleichsmessung im Durchlaufverfahren, d.h. bei kontinuierlich angetriebenem Transporteur 3 Riemenförderer 6 und damit bei kontinuierlicher Bewegung der Flaschen 2 möglich ist. Diese überaus vorteilhafte Vorgehensweise ermöglicht durch die Vermeidung der Stillstandszeiten eine erhebliche Leistungssteigerung einer solchen Anlage.

Durch entsprechende Einstellung des Riemenförderers 6 in Bezug auf das Führungsgeländer 5 ist wiederum erreicht, dass jede Flasche 2 bereits beim Passieren der bezogen auf die Transportrichtung A ersten Prüfposition 4 mit der erforderlichen Kraft P zwischen dem Riemen 6.1 und dem Führungsgeländer 5 eingespannt ist. Durch entsprechende Einstellung des Riemenfördererr 6 und/oder des Führungsgeländers 5 ist gewährleistet, dass diese Einspannkraft bei ein und derselben Flaschen 2, sofern diese tatsächlich dicht verschlossen ist, an beiden Prüfpositionen 4 identisch oder weitestgehend identisch Ist.

Die an den Prüfpositionen 4 von jeder an diesen Positionen vorbei bewegten Flaschen 2 erfassten Daten (insbesondere Größe der Verformung der Flaschen 2 durch die Beaufschlagung mit dem Druckmediumstrahl) werden von der Jeweiligen opto-elektrischen Sensoreinheit an die Auswerte- und/oder Steuereinheit 15 übermittelt und dort verglichen. Bei nicht zu tolerierenden Abweichungen wird auf eine nicht dicht verschlossene Flasche 2 geschlossen und von der Auswerte- und/oder Steuereinheit ein das Ausschleusen dieser Flasche veranlassendes Signal erzeugt.

Die Erfindung wurde voranstehend an Ausführungsbeispielen beschrieben. Es versteht sich, dass zahlreiche Änderungen sowie Abwandlungen möglich sind, ohne dass dadurch der der Erfindung zugrundellegende Erfindungsgedanke verlassen wird.

So ist es beispielsweise möglich bei der Vorrichtung 1b die beiden an den Prüfpositionen vorgesehenen Prüfeinheiten 9 bzw, 9a wiederum für eine Erfassung der Verformung der Behälter- oder Flaschenverschlüsse 28 oberhalb der Bewegungsbahn der Flaschen 2 anzuordnen.

Bei formstabilen und unter Druck stehenden Packmitteln ist es weiterhin bei der Dichtigkeitsprüfung durch Vergleichsmessung auch möglich, die Packmittel beispielsweise nur zwischen den Prüf- oder Messschritten dieser Vergleichsmessung mit dem zusätzlichen Innendruck zu beaufschlagen, um besonders deutliche Unterschiede in den Ergebnissen der einzelnen Messschritte zu erhalten, während die Flaschen 2 an den Prüfpositionen lediglich gegen Umfallen gesichert sind.

Weiterhin ist es selbstverständlich auch möglich, Prüfeinheiten mit zwei oder mehr als zwei Düsen 16 zum Ausbringen von zwei oder mehr als zwei Druckmedienstrahlen auf die Flaschen 2 oder anderen Packmittel auszubilden.

### Bezugszeichenliste

- 1, 1a, 1b: Vorrichtung zur berührungslosen Dichtigkeitsprüfung
- 2: Flasche
- 3: Transporteur
- 4: Prüfposition
- 5: Führungsgeländer
- 6: Riemenförderer
- 6.1: Riemen
- 6.2: Riemenrad
- 7: Antrieb des Riemenfördererr 6
- 8: Einstellmittel
- 9, 9a: Prüfeinrichtung
- 10: opto-elektrische Sensoreinheit
- 11: Druckmediumsystem
- 12, 13: Lichtquelle
- 14: Kamera
- 15: Auswerte- und/oder Steuereinheit
- 16: Düse
- 16.1: Druckmediumimpuls
- 17: Ventil
- 18: Flaschenwandbereich
- 19: Verformung
- 22: Signal- und Steuerleitung
- 23: Laserwegmesssensor
- 24, 25: reflektierender Laserstrahl
- 26: Linsensystem
- 27: Sensorchip
- 28: Behälter- bzw. Flaschenverschluss
- A: Transportrichtung
- P: Anpress- oder Einspannkraft

## Patentansprüche

1. Verfahren zur berührungslosen Dichtigkeitsprüfung von gefüllten und verschlossenen Packmitteln (2) in jeweils wenigstens zwei zeitlich aufeinander folgenden Messschritten, und zwar durch Beaufschlagung eines Packmittelbereichs (18) der Packmittel (2) an wenigstens einer Prüfposition (4), an der die Packmittel (2) auf einer Transportstrecke (3) vorbei geführt werden, mit mindestens einem von einem Druckmediumstrahl erzeugten Druckmediumimpuls (16.1) in jedem der wenigstens zwei Messschritte, durch Erfassung der hierbei verursachten Verformung (19) des Packmittelbereichs (18) mit wenigstens einer opto-elektrischen Sensoreinheit (10, 23) und durch Auswertung von der Verformung (19) des Packmittelbereichs (18) entsprechenden und von der jeweiligen opto-elektrischen Sensoreinheit (10, 23) gelieferten Prüf- oder Messdaten, die für eine Auswertung an eine Steuereinheit (15) übermittelt werden, **dadurch gekennzeichnet, dass** der Innenraum der Packmittel (2) während der Messschritte durch zusätzliche äußere Krafteinwirkung (P) auf das Packmittel (2) einen Innendruck wenigstens gleich, bevorzugt aber größer als der Umgebungsdruck aufweist, dass die Packmittel (2) hierfür während der Messschritte auf der Transportstrecke (3) zusammen gedrückt oder geklemmt werden,
dass die Messdaten der wenigstens zwei zeitlich aufeinander folgenden Messschritte miteinander verglichen werden und dass nicht tolerierbare Abweichungen zwischen den Messdaten der wenigstens zwei zeitlich aufeinander folgenden, an dem jeweiligen Packmittel (2) erfolgten Messschritte als Kriterium für ein Vorliegen eines undichten Packmittels (2) dienen.

2. Verfahren nach Anspruch 1, **dadurch gekennzeichnet, dass** die Packmittel (2) während der Messschritte auf der Transportstrecke (3) zwischen wenigstens einem umlaufend angetriebenen Transportband (6.1) an einer Seite der Transportstrecke (3) und einer Führung (5) an einer anderen Seite der Transportstrecke (3) oder zwischen zwei gegenläufig angetriebenen Transportbändern an beiden Seiten der Transportstrecke (3) zusammen gedrückt oder geklemmt werden.

3. Verfahren nach einem der vorhergehenden Ansprüche, **dadurch gekennzeichnet, dass** die Packmittel formstabile Packmittel sind, beispielsweise solche aus Kunststoff, oder dass die Packmittel nicht formstabile Packmittel sind, und dass die zusätzliche Krafteinwirkung (P) dann derart gewählt ist, dass die nicht formstabilen Packmittel durch einen erhöhten Innendruck während der berührungslosen Dichtigkeitsmessung formstabil sind.

4. Verfahren nach einem der vorhergehenden Ansprüche, **dadurch gekennzeichnet, dass** das Zeitintervall zwischen den wenigstens zwei Messschritten kleiner als 5 Sekunden, vorzugsweise kleiner als 2 Sekunden ist.

5. Verfahren nach einem der vorhergehenden Ansprüche, **dadurch gekennzeichnet, dass** die Messschritte bei an der Prüfposition (4) stationär angeordneten oder bei an der Prüfposition (4) vorbei bewegten Packmitteln (2) erfolgt.

6. Verfahren nach Anspruch 5, **dadurch gekennzeichnet, dass** die wenigstens zwei Messschritten an wenigstens zwei in einer Bewegungs- oder Transport. richtung aufeinander folgenden und voneinander beabstandeten Prüfpositionen (4) erfolgen.

7. Verfahren nach einem der vorhergehenden Ansprüche, **dadurch gekennzeichnet, dass** die opto-elektrische Sensoranordnung eine Kamera (14) oder ein Laserstrahl gestützter Sensor, beispielsweise ein Laserwegmesssensor (23) ist.

8. Verfahren nach einem der vorhergehenden Ansprüche, **dadurch gekennzeichnet, dass** insbesondere bei Ausbildung des Packmittels als Behälter oder Flasche (2) die Beaufschlagung mit dem wenigstens einem Druckmediumstrahl an einem Bereich (18) der Behälterwandung und/oder an einem Behälterverschluss (28) erfolgt.

9. Verfahren nach einem der vorhergehenden Ansprüche, **dadurch gekennzeichnet, dass** das Druckmedium ein gas- und/oder dampfförmiges Medium, beispielsweise Luft oder Inertgas ist und/oder die Dauer jedes Druckmediumimpulses etwa 1 ms bis 6 ms beträgt.

10. Vorrichtung zur berührungslosen Dichtigkeitsprüfung von gefüllten und verschlossenen Packmitteln (2) durch Beaufschlagung eines Packmittelbereichs (18) des jeweiligen Packmittels (2) in wenigstens zwei Prüf- oder Messschritten mit mindestens einem von einem Druckmediumstrahl erzeugten Druckmediumimpuls (16.1) und durch Erfassung und Auswertung der hierbei verursachten Verformung (19) des Packmittelbereichs (18), mit einem Packmitteltransporteur (3), mit wenigstens einer Prüfeinrichtung (9, 9a) an einer Prüfposition (4) des Packmitteltransporteurs (3), an der die Packmittel (2) mit dem Packmitteltransporteur (3) vorbei bewegbar sind, wobei die Prüfeinrichtung Mittel zur Erzeugung des jeweiligen Druckmediumimpulses (16.1) sowie wenigstens eine opto-elektrischen Sensoreinheit (10, 23) zur Erfassung der jeweiligen durch den Druckmediumimpuls (16.1) verursachten Verformung (19) aufweist, sowie mit einer Auswerte- und/oder Steuereinheit (15) zur Auswertung der von der wenigstens einen opto-elektrischen Sensoreinheit (10, 23) gelieferten, der Verformung (19) des jeweiligen Packmittelbereichs (18) entsprechenden Messdaten, **dadurch gekennzeichnet, dass** die Vorrichtung weiter Mittel (5, 6) umfasst, mit denen der Innenraum des jeweiligen Packmittels (2) während der wenigstens zwei einen Prüf- oder Messschrittes durch zusätzliche äußere Krafteinwirkung (P) auf das Packmittel (2) einen Innendruck wenigstens gleich, bevorzugt aber größer als der Umgebungsdruck aufweist, wobei die Mittel zur Erzeugung der zusätzlichen Krafteinwirkung (P) mechanische Mittel, zum Klemmen oder Zusammendrücken des Packmittels (2) sind, und wobei die Auswerte- und/oder Steuereinheit (15) für einen Vergleich der von der wenigstens einen opto-elektrischen Sensoreinheit (10, 23) gelieferten die jeweilige Verformung (19) kennzeichnenden Messdaten aus zwei zeitlich aufeinander folgenden Prüf- oder Messschritten ausgebildet ist.

11. Vorrichtung nach Anspruch 10, **dadurch gekennzeichnet, dass** die Auswerte- und/oder Steuereinheit (15) für einen Vergleich der von den wenigstens einen opto-elektrischen Sensoreinheit (10, 23) gelieferten die jeweilige Verformung (19) kennzeichnenden Messdaten mit für das jeweilige Packmittel (2) typischen Referenzdaten ausgebildet ist.

12. Vorrichtung nach einem der vorhergehenden Ansprüche 10 bis 11 **gekennzeichnet durch** wenigstens zwei in einer Bewegungs- oder Transportrichtung (A) des Packmitteltransporteurs (3) aufeinander folgenden und voneinander beabstandeten Prüfpositionen (4).

13. Vorrichtung nach einem der vorhergehenden Ansprüche 10 bis 12, **dadurch gekennzeichnet, dass** die opto-elektrische Sensoranordnung eine Kamera (14) oder ein Laserstrahl gestützter Sensor, beispielsweise ein Laserwegmesssensor (23) ist.

14. Vorrichtung nach einem der vorhergehenden Ansprüche 10 bis 13, **dadurch gekennzeichnet, dass** die Mittel zur Erzeugung der zusätzlichen Krafteinwirkung (P) von wenigstens einem umlaufend angetriebenen Transportband (6.1) an einer Seite einer Transportstrecke des Packmitteltransporteurs (3) und einer Führung (5) an einer anderen Seite der Transportstrecke oder von zwei gegenläufig angetriebenen Transportbändern an beiden Seiten der Transportstrecke gebildet sind.

15. Vorrichtung nach einem der vorhergehenden Ansprüche 10 bis 14, **dadurch gekennzeichnet, dass** an der wenigstens einen Prüfposition (4) zumindest eine Düse (16) zum Ausbringen des Druckmediumstrahls vorgesehen ist.

## Claims

1. Method for the non-contact leak testing of filled and closed packaging means (2), in each case in at least two measuring steps, following one another in temporal sequence, and specifically by applying at least one pressure medium pulse (16.1) created by a pressure medium beam to a packaging means region (18) of the packaging means (2) in at least one testing position (4) past which the packaging means (2) are conveyed on a transport segment (3), in each of the at least two measuring steps, by detecting the deformation (19) of the packaging means region (18) created thereby, by means of at least one optoelectronic sensor unit (10, 23) and by evaluating the testing or measuring data corresponding to the deformation (19) of the respective packaging means region (18) and supplied by the respective optoelectronic sensor unit (10, 23), which is transferred for an evaluation to a control unit (15), **characterised in that** the interior of the packaging means (2), during the measuring steps, due to additional external force effect (P) on the packaging means (2), exhibit an internal pressure which is at least equal to, but preferably greater than, the ambient pressure, that for this purpose the packaging means (2), during the measurement steps, are pressed or clamped together on the transport segment (3), that the measurement data of the at least two measuring steps, following one another in temporal sequence, are compared with one another, and that any non-tolerable deviations between the measurement data from the at least two measuring steps, following one another in temporal sequence, on the respective packaging means (2) serve as criterion for the presence of a leaking packaging means (2).

2. Method according to claim 1, **characterised in that** the packaging means (2), during the measuring steps, are pressed or clamped together on the transport segment (3) between at least one driven circulating driven transport band (6.1) on one side of the transport segment (3) and a guide element (5) on another side of the transport segment (3), or between two driven transport bands, running in opposite directions, on both sides of the transport segment (3).

3. Method according to any one of the preceding claims, **characterised in that** the packaging means are shape-stable packaging means, for example such as are made of plastic, or that the packaging means are not shape-stable packaging means, and that the additional force effect (P) is then selected in such a way that the non-shape stable packaging means are rendered shape-stable due to increased internal pressure during the non-contact leak tightness measurement.

4. Method according to any one of the preceding claims, **characterised in that** the time interval between the at least two measuring steps is less than 5 seconds, and preferably less than 2 seconds.

5. Method according to any one of the preceding claims, **characterised in that** the measuring steps take place with the packaging means (2) being arranged stationary at the testing position (4) or being moved past the testing position (4).

6. Method according to claim 5, **characterised in that** the at least two measuring steps follow one another in at least two testing positions (4) following one another and located at a distance from one other in a direction of movement or transport.

7. Method according to any one of the preceding claims, **characterised in that** the optoelectronic sensor arrangement is a camera (14) or a sensor supported by a laser beam, for example a laser path measuring sensor (23).

8. Method according to any one of the preceding claims, **characterised in that**, in particular with the configuration of the packaging means as a container or bottle (2), the application of the at least one pressure medium pulse takes place at a region (18) of the container wall and/or at a container closure (28).

9. Method according to any one of the preceding claims, **characterised in that** the pressure medium is a gaseous and/or vaporous medium such as air or inert gas, and/or that the duration of each pressure medium pulse is some 1 ms to 6 ms.

10. Device for the non-contact leak testing of filled and closed packaging means (2), by applying on a packaging means region (18) of the respective packaging means (2), in at least two testing or measuring steps, a pressure medium pulse (16.1) created by a pressure medium beam, and by detecting and evaluating the deformation (19) of the packaging means region (18) created thereby,
with a packaging means transporter (3),
with at least one testing device (9, 9a) at a testing position (4) of the packaging means transporter (3), past which the packaging means (2) can be moved by the packaging means transporter (3), wherein the testing device comprises means for producing the respective pressure medium pulse (16.1) as well as at least one optoelectronic sensor unit (10, 23) for detecting the deformation (19) caused in each case by the pressure medium pulse (16.1),
as well as with an evaluation and/or control unit (15) for the evaluation of the measuring data supplied by the at least one optoelectronic sensor unit (10, 23), corresponding to the deformation (19) of the respective packaging means region (18).
**characterised in that** the device comprises further means (5, 6) with which the interior of the respective packaging means (2), during the at least two testing or measuring steps, and due to additional external force effect (P) exerted on the packaging means (2), exhibits an interior pressure which is at least equal to, but preferably greater than, the ambient pressure,
wherein the means for producing the additional force effect (P) are mechanical means, for clamping or compressing the packaging means (2),
and wherein the evaluation and/or control unit (15) is configured for a comparison of the measuring data supplied by the at least one optoelectronic sensor unit (10, 23) which characterises the respective deformation (19), from two testing or measuring steps following one another in temporal sequence.

11. Device according to claim 10, **characterised in that** the evaluation and/or control unit (15) is configured for a comparison of the measuring data supplied by the at least one optoelectronic sensor unit (10, 23) which characterises the respective deformation (19), with reference data typical of the respective packaging means (2).

12. Device according to any one of the preceding claims 10 to 11, **characterised by** at least two testing positions (4) following one another in a direction of movement or transport (A) of the packaging means transporter (3) and spaced at a distance from one another.

13. Device according to any one of the preceding claims 10 to 12, **characterised in that** the optoelectronic sensor arrangement is a camera (14) or a sensor supported by a laser beam, for example a laser path measuring sensor (23).

14. Device according to any one of the preceding claims 10 to 13, **characterised in that** the means for producing the additional force effect (P) are formed by at least one circulating driven transport band (6.1) on one side of the transport segment (3) and a guide element (5) on another side of the transport segment, or by two driven transport bands, running in opposite directions, on both sides of the transport segment.

15. Device according to any one of the preceding claims 10 to 14, **characterised in that** at least one nozzle (16) is provided at the at least one testing position (4) for the application of the pressure medium pulse.

## Revendications

1. Procédé servant à contrôler l'étanchéité sans contact de moyens de conditionnement (2) remplis et fermés lors de respectivement au moins deux étapes de mesure successives, à savoir en soumettant une zone de moyen de conditionnement (18) des moyens de conditionnement (2) au niveau d'au moins une position de contrôle (4), le long de laquelle les moyens de conditionnement (2) sont guidés sur une ligne de transport (3), à l'action d'au moins une impulsion de milieu sous pression (16.1) générée par un jet de milieu sous pression lors de chacune des deux étapes de mesure ou plus, en détectant la déformation (19) provoquée dans le cas présent de la zone de moyen de conditionnement (18) à l'aide d'au moins une unité de capteur (10, 23) opto-électrique, et en évaluant des données de contrôle ou de mesure correspondant à la déformation (19) de la zone de moyen de conditionnement (18) et fournies par l'unité de capteur (10, 23) respectivement opto-électrique, lesquelles données de contrôle ou de mesure sont transmises à une unité de commande (15) en vue d'une évaluation, **caractérisé en ce que** l'espace intérieur des moyens de conditionnement (2) présente, au cours des étapes de mesure, du fait d'une action de force (P) extérieure supplémentaire sur le moyen de conditionnement (2), une pression intérieure au moins égale, de manière préférée toutefois supérieure à la pression environnante, que les moyens de conditionnement (2) sont comprimés ou serrés à cet effet au cours des étapes de mesure sur la ligne de transport (3),
**que** les données de mesure des deux étapes de mesure successives ou plus sont comparées les unes aux autres, et que des écarts non admissibles entre les données de mesure des deux étapes de mesure ou plus successives effectuées au niveau du moyen de conditionnement (2) respectif font office de critère pour une présence d'un moyen de conditionnement (2) non étanche.

2. Procédé selon la revendication 1, **caractérisé en ce que** les moyens de conditionnement (2) sont comprimés ou serrés au cours des étapes de mesure sur la ligne de transport (3) entre au moins une bande transporteuse (6.1) entraînée en rotation au niveau d'un côté de la ligne de transport (3) et un guidage (5) au niveau d'un autre côté de la ligne de transport (3) ou entre deux bandes transporteuses entraînées en sens contraire au niveau des deux côtés de ligne de transport (3).

3. Procédé selon l'une quelconque des revendications précédentes, **caractérisé en ce que** les moyens de conditionnement sont des moyens de conditionnement de forme stable, par exemple des moyens de conditionnement en matière plastique, ou que les moyens de conditionnement sont des moyens de conditionnement de forme instable, et que l'action de force (P) supplémentaire est choisie alors de telle manière que les moyens de conditionnement de forme instable sont de forme stable du fait d'une pression intérieure élevée au cours de la mesure d'étanchéité sans contact.

4. Procédé selon l'une quelconque des revendications précédentes, **caractérisé en ce que** l'intervalle de temps entre les deux étapes de mesure ou plus est inférieur à 5 secondes, de préférence est inférieur à 2 secondes.

5. Procédé selon l'une quelconque des revendications précédentes, **caractérisé en ce que** les étapes de mesure sont effectuées dans le cas de moyens de conditionnement (2) disposés de manière stationnaire au niveau de la position de contrôle (4) ou déplacés le long de la position de contrôle (4).

6. Procédé selon la revendication 5, **caractérisé en ce que** les deux étapes de mesure ou plus sont effectuées au niveau d'au moins deux positions de contrôle (4) se suivant dans une direction de déplacement ou de transport et espacées les unes des autres.

7. Procédé selon l'une quelconque des revendications précédentes, **caractérisé en ce que** l'ensemble de capteurs opto-électriques est une caméra (14) ou un capteur assisté par un faisceau laser, par exemple un capteur de mesure de trajet de faisceaux laser (23).

8. Procédé selon l'une quelconque des revendications précédentes, **caractérisé en ce qu'**en particulier lorsque le moyen de conditionnement est réalisé sous la forme d'un contenant ou d'une bouteille (2), l'action exercée par l'au moins un jet de milieu sous pression est effectuée au niveau d'une zone (18) de la paroi de contenant et/ou au niveau d'une fermeture de contenant (28).

9. Procédé selon l'une quelconque des revendications précédentes, **caractérisé en ce que** le milieu sous pression est un milieu sous forme de gaz et/ou sous forme de vapeur, par exemple est de l'air ou un gaz inerte, et/ou la durée de chaque impulsion de milieu sous pression va d'environ 1 ms à 6 ms.

10. Dispositif servant à contrôler l'étanchéité sans contact de moyens de conditionnement (2) remplis et fermés en soumettant une zone de moyen de conditionnement (18) du moyen de conditionnement (2) respectif lors d'au moins deux étapes de contrôle ou de mesure à l'action d'au moins une impulsion de milieu sous pression (16.1) générée par un jet de milieu sous pression et en détectant et en évaluant la déformation (19) provoquée dans le cas présent de la zone de moyen de conditionnement (18),
comprenant un transporteur de moyen de conditionnement (3),
comprenant au moins un système de contrôle (9, 9a) au niveau d'une position de contrôle (4) du transporteur de moyen de conditionnement (3), le long de laquelle les moyens de conditionnement (2) sont déplacés avec le transporteur de moyen de conditionnement (3), dans lequel le système de contrôle présente des moyens servant à générer l'impulsion de milieu sous pression (16.1) respective ainsi qu'au moins une unité de capteur (10, 23) opto-électrique servant à détecter la déformation (19) respective provoquée par l'impulsion de milieu sous pression (16.1),
ainsi que comprenant une unité d'évaluation et/ou de commande (15) servant à évaluer les données de mesure fournies par l'au moins une unité de capteur (10, 23) opto-électrique, correspondant à la déformation (19) de la zone de moyen de conditionnement (18) respective,
**caractérisé en ce que** le dispositif comprend par ailleurs des moyens (5, 6), avec lesquels l'espace intérieur du moyen de conditionnement (2) respectif présente au cours des deux étapes de contrôle ou de mesure ou plus, du fait d'une action de force (P) extérieure supplémentaire sur le moyen de conditionnement (2), une pression intérieure au moins égale, de manière préférée supérieure à la pression environnante,
dans lequel les moyens servant à générer l'action de force (P) supplémentaire sont des moyens servant à serrer ou à comprimer le moyen de conditionnement (2),
et dans lequel l'unité d'évaluation et/ou de commande (15) est réalisée en vue d'une comparaison des données de mesure fournies par l'au moins une unité de capteur (10, 23) opto-électrique, caractérisant la déformation (19) respective, issues de deux étapes de contrôle ou de mesure successives.

11. Dispositif selon la revendication 10, **caractérisé en ce que** l'unité d'évaluation et/ou de commande (15) est réalisée en vue d'une comparaison des données de mesure fournies par l'au moins une unité de capteur (10, 23) opto-électrique, caractérisant la déformation (19) respective à des données de référence typiques du moyen de conditionnement (2) respectif.

12. Dispositif selon l'une quelconque des revendications 10 à 11, **caractérisé par** au moins deux positions de contrôle (4) se suivant les unes les autres dans une direction de déplacement ou de transport (A) du transporteur de moyen de conditionnement (3) et espacées les unes des autres.

13. Dispositif selon l'une quelconque des revendications 10 à 12 précédentes, **caractérisé en ce que** l'ensemble formant capteur opto-électrique est une caméra (14) ou un capteur assisté par faisceau laser, par exemple un capteur de mesure de trajet de faisceau laser (23).

14. Dispositif selon l'une quelconque des revendications 10 à 13 précédentes, **caractérisé en ce que** les moyens servant à générer l'action de force (P) supplémentaire sont formés par au moins une bande transporteuse (6.1) entraînée en rotation au niveau d'un côté d'une ligne de transport du transporteur de moyen de conditionnement (3) et un guidage (5) au niveau d'un autre côté de la ligne de transport ou par deux bandes transporteuses entraînées en sens contraire au niveau des deux côtés de la ligne de transport.

15. Dispositif selon l'une quelconque des revendications 10 à 14 précédentes, **caractérisé en ce qu'**au moins une buse (16) servant à distribuer le jet de milieu sous pression est prévue au niveau de l'au moins une position de contrôle (4).
